# EUROPEAN PATENT SPECIFICATION

(11) **EP 1 348 679 B1**
(45) Date of publication and mention of the grant of the patent: **18.01.2006**
(21) Application number: 03007316.7
(22) Date of filing: 31.03.2003
(51) Int. Cl.: C04B 30/02, C04B 26/02, F01N 3/28

(54) **Holding material for catalytic converter**
Halterungsmaterial für einen Katalysator
Matériau de retenue pour un convertisseur catalytique

(30) Priority: 29.03.2002 JP 2002096878
(43) Date of publication of application: 01.10.2003
(73) Proprietor: GE Techno Co., Ltd., Yamagata-shi, Gifu (JP); NICHIAS CORPORATION, Tokyo 105 (JP)
(72) Inventor: Mutou, Mituru, Yamagata-shi, Gifu (JP); Ishikawa, Osamu, Yamagata-shi, Gifu (JP); Nokura, Hideki, Yamagata-shi, Gifu (JP); Anji, Toshiyuki, Minato-ku, Tokyo (JP); Tanaka, Masafumi, Minato-ku, Tokyo (JP); Sakane, Tadashi, Nichias Corporation, Hamamatsu-shi, Shizuoka (JP); Mochida, Takahito, Nichias Corporation Hamamatsu R, Hamamatsu-shi, Shizuoka (JP)
(74) Representative: Grünecker, Kinkeldey, Stockmair & Schwanhäusser Anwaltssozietät

(56) References cited:
- EP-A- 0 444 473
- EP-A- 0 551 532
- GB-A- 2 075 076
- US-A- 5 869 010
- DATABASE WPI Section Ch, Week 199407 Derwent Publications Ltd., London, GB; Class A93, AN 1994-053877 XP002262270 & JP 06 009253 A (IBIDEN CO LTD), 18 January 1994 (1994-01-18)
- PATENT ABSTRACTS OF JAPAN vol. 2000, no. 25, 12 April 2001 (2001-04-12) & JP 2001 207394 A (KIHOKU ENGINEER:KK), 3 August 2001 (2001-08-03)

## Description

### Background of the Invention

### Field of the Invention

The present invention relates to a catalyst carrier holding material for a catalytic converter, for example, for purging exhaust gas emitted from an automobile.

### Description of the Related Art

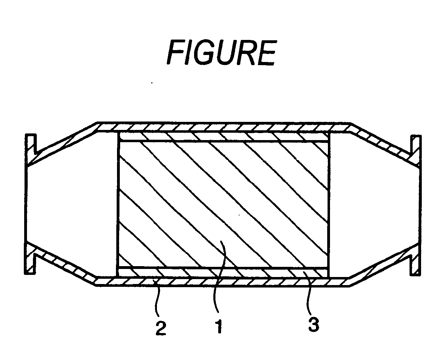

As known commonly, a catalytic converter for purging exhaust gas is loaded in a vehicle such as an automobile in order to remove detrimental components such as carbon monoxide, hydrocarbon and nitrogen oxides from exhaust gas emitted from an engine of the vehicle. Generally, as shown in Fig. 1 which is a sectional view, the catalytic converter has a catalyst carrier 1 shaped like a cylinder, a metal casing 2 for receiving the catalyst carrier 1, and a holding material 3 interposed in a gap between the catalyst carrier 1 and the casing 2 while mounted on the catalyst carrier 1, see e.g. US 5,869,010 .

Generally, the catalyst carrier 1 has a cylindrical honey-comb molded material, for example, made of cordierite, and a precious metal catalyst carried by the molded material. It is therefore necessary that the holding material 3 interposed in a gap between the catalyst carrier 1 and the casing 2 has a function for holding the catalyst carrier 1 safely to prevent the catalyst carrier 1 from being damaged by collision with the casing 2 due to vibration or the like during the running of the automobile, and a function for sealing the catalyst carrier 1 to prevent non-purged exhaust gas from leaking out through the gap between the catalyst carrier 1 and the casing 2. Therefore, the holding material mainly used at the present time is a holding material which is molded out of inorganic fiber such as alumina fiber, mullite fiber or other ceramic fiber bound with an organic binder and which is shaped like a mat or cylinder having a predetermined thickness.

Examples of the organic binder generally used in the holding material 3 include rubber compounds, water-soluble organic high-molecular compounds, thermoplastic resins, and thermosetting resins. It is necessary to make the holding material 3 thin to a certain degree because the holding material 3 can be hardly mounted on the catalyst carrier 1 and hardly attached to the casing 2 if the holding material 3 is too thick. Therefore, the holding material 3 generally used is formed so that the ratio of the amount of the organic binder to the total amount of the holding material is in a range of from 5 % by weight to 8 % by weight or about 10 % by weight at maximum.

The catalyst carrier 1 has been however recently heated to about 1,000°C in order to improve purging efficiency. For this reason, the organic binder listed above is decomposed and burned out easily, so that CO₂, CO and various kinds of organic gases are produced. Particularly, a great deal of gas is produced in an early stage of the start of the catalytic converter. Regulation of exhaust emission control has become more and more rigid. There is a possibility that the amount of exhaust gas may be over a regulated value because of CO₂, etc. derived from the organic binder. On the other hand, electronic engine control has been recently developed. The presence of CO₂ having no relation to exhaust gas originally may cause malfunctions of exhaust sensors to exert a bad influence on the electronic engine control. To prevent this drawback, a maker carries out a baking process to burn out the organic binder before shipping. The baking process is a heavy burden imposed on the maker. This is a major issue.

Reduction in quantity of the organic binder is also conceived. In this case, force of binding the inorganic fiber is however weakened in accordance with the reduction in quality of the organic binder. For this reason, it is necessary to make the holding material 3 thick, so that there is a problem that assembling property is worsened. Particularly when the holding material 3 is provided as a mat-like holding material, the assembling work becomes difficult.

### Summary of the Invention

As described above, the conventional holding material has various problems resulting from the organic binder. Therefore, an object of the invention is to provide a catalytic converter holding material in which inorganic fiber can be bound well to keep a thickness of the holding material equal to that of a conventional holding material even in the case where the amount of an organic binder used is reduced or, preferably, even in the case where no organic binder is used.

The present inventors have made eager examination to achieve the foregoing object. As a result, it has been found that the foregoing object can be achieved when the organic binder is partially or wholly replaced by fibrillated organic fiber.

That is, in order to achieve the foregoing object, the invention provides a holding material for a catalytic converter having a catalyst carrier, a metal casing for receiving the catalyst carrier, and a holding material interposed in a gap between the catalyst carrier and the metal casing while wound on the catalyst carrier, wherein the holding material is constituted by a molding of inorganic fiber molded with fibrillated fiber into a predetermined shape and wherein said fibrillated fiber has a fiber length ranging from 0.05 to 2.0 mm.

### Brief Description of the Drawings

Fig. 1 is a sectional view showing a catalytic converter.

### Detailed Description of the Preferred Embodiments

A holding material according to the invention will be described below in detail.

The holding material according to the invention is constituted by a molding of inorganic fiber molded into a predetermined shape and preferably bound with only fibrillated fiber made of organic fiber as a kind of binder. In this case, a synthetic organic binder is not substantially contained in the molding. As occasion demands, a very small amount of an organic binder may be used in combination with the fibrillated fiber. As the fibrillated fiber, both of natural organic fiber and synthetic organic fiber may be used. Further, it has been found that fibrillated natural organic fiber is suitable as a kind of binder to provide a holding material according to the present invention.

The fibrillated fiber used in the invention may be made of natural fiber and has a fiber length ranging from 0.05 mm to 2.0 mm. If the fiber length is smaller than 0.05 mm, a holding material having an aimed thickness cannot be obtained because the fibrillated fiber cannot function as a kind of binder. On the other hand, if the fiber length is larger than 2.0 mm, a holding material having uniform surface pressure cannot be obtained because it is difficult to disperse the fibrillated fiber into slurry uniformly.

In the case where the natural fiber is used, a kind of the natural fiber is not particularly limited. For example, wood pulp, bast pulp, or cotton pulp can be preferably used as the fibrillated fiber. Various kinds of pulp as described above can be used without any particular limitation. Generally, "N-BKP", which is long in fiber length and flexible, may be preferably used as the wood pulp. Hemp, a paper mulberry (kouzo in Japanese), a paper bush (mitsumata in Japanese) or the like may be preferably used as the bast pulp.

In order to provide the fibrillated fiber as a kind of binder, the organic fiber is processed as follows. First, the organic fiber is cut by a refiner or the like. Then, the obtained fiber pieces are treated for a long time by a special beater in the condition of freeness of 300 ml to 700 ml, so that the organic fiber is fibrillated. After this fibrillation, a fibrillated part of the organic fiber is preferably about 0.005 mm to about 1 mm while the fiber length is adjusted to be in the preferable range of from 0.05 mm to 2.0 mm. As a result, aqueous slurry containing fibrillated organic fiber is prepared. When the aqueous slurry is dried, the fibrillated fiber to be used as a kind of binder can be obtained.

It can be said that this process is a process to obtain fibrillated fiber, and the fibrillated fiber has a function as a kind of binder. As mentioned above, the fibrillated fiber is, for example, made of pulp. This so-called "pulp binder" is different from an organic binder and an inorganic binder in that fuzz of the fiber tie inorganic fibers each other. In other words, the "pulp binder" does not change its properties to tie inorganic fibers each other.

In the invention, a single natural fiber material may be used as a kind of binder by fibrillation of fiber or a plurality of natural fiber materials may be used in combination suitably to utilize characteristics such as fiber size and fiber length. A preferred example of the mixture of natural fiber materials is a mixture of wood pulp and bast pulp. In the case of this mixture, wood pulp and bast pulp may be preferably mixed so that the weight ratio of wood pulp to bast pulp is in a range of from 20:80 to 80:20.

The amount of the fibrillated fiber used is not particularly limited if the inorganic fiber can be bound with the fibrillated fiber. The amount of the fibrillated fiber is selected to be in a range of from 0.2 parts by weight to 5 parts by weight with respect to 100 parts by weight of the inorganic fiber. If the amount of the fibrillated fiber is smaller than 0.2 parts by weight, binding force is short. If the amount of the fibrillated fiber is larger than 5 parts by weight, holding and sealing performance required as the holding material cannot be obtained because the amount of the inorganic fiber is relatively low. The especially preferred amount of the fibrillated fiber is in a range of from 1 part by weight to 3 parts by weight.

According to JP-A-2001-207394, fibrillated fiber is used as a binder for inorganic material. JP-A-2001-207394 discloses that the amount of the fibrillated fiber is preferably in a range of from 1 parts by weight to 20 parts by weight. On the other hand, the amount of the fibrillated fiber according to the present invention is in a range of from 0.2 parts by weight to 5 parts by weight, preferably in a range of from 0.2 parts by weight to 2.5 parts by weight, and more preferably in a range of from 0.2 parts by weight to 1 parts by weight. These differences of the preferable ranges derive from a circumstance that a holding material according to the present invention is heated when it is used for a catalytic converter. More specifically, since the holding material according to the present invention is heated, it is preferable that the amount of the fibrillated fiber is as small as possible with keeping sufficient binding force in order to reduce volatilization of an organic component in the fibrillated fiber. In terms of the above-mentioned usage as the holding material, the volatilization of an organic component in the fibrillated fiber needs to be avoided as much as possible. This is the reason why the preferable ranges are different from that of JP-A-2001-207394.

Further, an inorganic binder may be mixed with the above-mentioned fibrillated fiber. In order to avoid disadvantages derived from volatilization of an organic component in the fibrillated fiber, the amount of fibrillated fiber may be reduced. Even in such a case, the inorganic fiber are bound sufficiently by mixing the inorganic binder, and a holding material according to the present invention can be provided with keeping the thickness same as that of the related art. The inorganic binder to be mixed is not limited to specific materials and selected from know materials. Examples of the inorganic binder are glass frit, colloidal silica, alumina sol, silica sol, silicate of soda, titania sol, lithium silicate and water glass. Further, a combination of at least two of these examples may be used.

The amount of the inorganic binder is not particularly limited if the inorganic fiber can be bound with the inorganic binder. The amount of the inorganic binder is selected to be in a range of from 0.2 parts by weight to 5 parts by weight with respect to 100 parts by weight of the inorganic fiber. If the amount of the inorganic fiber is smaller than 0.2 parts by weight, binding force is short. If the amount of the inorganic fiber is larger than 5 parts by weight, holding and sealing performance required as the holding material cannot be obtained because the amount of the inorganic fiber is relatively low. Further, the amount of the inorganic binder is preferably in a range of from 0.2 parts by weight to 2.5 parts and more preferably in a range of from 0.2 parts by weight to 1 part by weight (especially, excluding. 1 parts by weight).

An organic binder may be used in combination with the fibrillated fiber if the amount of the organic binder is small. A known material can be used as the organic binder. Examples of the material of the organic binder include rubber compounds, water-soluble organic high-molecular compounds, thermoplastic resins (for example, acrylic emulsion), and thermosetting resins. Specifically, examples of the rubber compounds include a copolymer of n-butyl acrylate and acrylonitrile, a copolymer of ethyl acrylate and acrylonitrile, a copolymer of butadiene and acrylonitrile, and butadiene rubber. Examples of the water-soluble organic high-molecular compounds include carboxymethyl cellulose, and polyvinyl alcohol. Examples of the thermoplastic resins include: homopolymers and copolymers of acrylic acid, acrylic ester, acrylamide, acrylonitrile, methacrylic acid, methacrylic ester, etc.; an acrylonitrile-styrene copolymer; and an acrylonitrile-butadiene-styrene terpolymer. Examples of the thermosetting resins include bisphenol epoxy resins, and novolac epoxy resins.

According to the present invention, in the case where the above-mentioned organic binder is used, the obtained holding material has flexibility. Therefore, workability to wind around a catalyst carrier is improved since the holding material becomes more flexible. The amount of the organic binder is not specifically limited unless the holding material has appropriate flexibility. For example, the amount of the organic binder is selected to be in a range of from 0.2 parts by weight to 2 parts by weight with respect to 100 parts by weight of the inorganic fiber. If the amount of the organic binder is smaller than 0.2 parts by weight, flexibility is short. If the amount of the organic binder is larger than 2 parts by weight, holding and sealing performance required as the holding material cannot be obtained because the amount of the inorganic fiber is relatively low. Further, the amount of the organic binder is preferably in a range of from 0.2 parts by weight to 1.5 parts and more preferably in a range of from 0.2 parts by weight to 1 part by weight (especially, excluding 1 parts by weight).

From another point of view, the amount of the organic binder may be selected to be not larger than 3 % by weight, preferably not larger than 1.5 % by weight, relative to the total amount of the holding material. If the amount of the organic binder contained is larger than 3 % by weight, the same disadvantage as in the related art occurs because CO₂, CO and various kinds of organic gases are produced. When the organic binder is used in combination with the fibrillated fiber, the amount of the fibrillated fiber is reduced in accordance with the amount of the organic fiber used.

On the other hand, any kind of inorganic fiber as used in a holding material in the related art can be used as the inorganic fiber. For example, alumina fiber, mullite fiber or other ceramic fiber may be used suitably. More specifically, the material preferably used as the alumina fiber is fiber, for example, containing 90 % by weight or more of Al₂O₃ (and SiO₂ as a residual component), having low crystallinity in terms of X-ray crystallography and having a mean fiber size of 3 µm to 7 µm and a wet volume of 400 cc/5 g to 1,000 cc/5 g. The material preferably used as the mullite fiber is a mullite composition, for example, having an Al₂O₃/SiO₂ weight ratio of about 72/28 to about 80/20, having low crystallinity in terms of X-ray crystallography and having a mean fiber size of 3 µm to 7 µm and a wet volume of 400 cc/5 g to 1,000 cc/5 g.

The wet volume is calculated by a method having the following steps:
(1) weighing 5 g of a dried fiber material by a weigher with accuracy of two or more decimal places;
(2) putting the weighed fiber material into a glass beaker having a weight of 500 g;
(3) putting about 400 cc of distilled water at a temperature of 20-25°C into the glass beaker prepared in the step (2) and dispersing the fiber material into the distilled water (by an ultrasonic cleaner if necessary) while stirring carefully by a stirrer so that the fiber material is not cut;
(4) transferring the content of the beaker prepared in the step (3) into a 1,000 ml graduated measuring cylinder and adding distilled water into the graduated measuring cylinder up to the scale of 1,000 cc;
(5) ten-times repeating a process of stirring the content of the graduated measuring cylinder prepared in the step (4) by turning the graduated measuring cylinder upside down while blocking an opening of the graduated measuring cylinder with the palm of a hand or the like carefully to prevent water from leaking out;
(6) measuring the sedimentation volume of fiber by eye observation after placing the graduated measuring cylinder quietly under room temperature for 30 minutes after the stop of the stirring; and
(7) applying the aforementioned procedure to three samples and taking an average of the measured values as a measured value.

Examples of the other ceramic fiber include silica-alumina fiber, and silica fiber. Known fiber as used in a holding material in the related art may be used as the other ceramic fiber. In addition, glass fiber or rock wool may be mixed with the inorganic fiber.

A method for producing the holding material according to the invention is not particularly limited. A method according to the related-art producing method using an organic binder can be used. For example, a metal net of 65-200 mesh is mounted on a suitable porous hollow platelike metal pattern to prepare a paper-making pattern. An aqueous slurry containing inorganic fiber and a fibrillated fiber and containing a small amount of an organic binder if necessary is poured into the paper-making pattern, dehydrated by suction and dried to obtain a flat mat-like holding material. As occasion demands, an adequate amount of any known additives such as a dispersing agent, a stabilizing agent, etc. may be mixed with the aqueous slurry.

The inorganic fiber may be shaped like a cylinder in accordance with the shape of the outer circumference of the catalyst carrier and the shape of the inner circumference of the casing to form a so-called mold type holder. When the mat-like holding material is used to be wound on the catalyst carrier, the winding state of the mat-like holding material must be held by a tape or the like. When the mold type holder is used, such work can be dispensed with, so that the mold type holder is advantageous to production of a catalytic converter.

Incidentally, the mold type holder can be produced when the suction-dehydration molding is performed by use of a cylindrical metal net.

As shown in Fig. 1, the holding material formed in the aforementioned manner according to the invention is interposed in the gap between the catalyst carrier 1 and the casing 2 while wound on the catalyst carrier 1 in the same manner as in the related art.

### Examples

The invention will be described below more specifically in connection with the following Example and Comparative Examples but the invention is not limited thereto at all.

### (Example 1)

Wood pulp was treated by a beater to obtain an aqueous slurry containing fiber having a mean fiber length of 1.0 mm. The aqueous slurry was dried to obtain a fibrillated fiber as a kind of binder. Then, 2 parts by weight of the fibrillated fiber was mixed with 100 parts by weight of alumina fiber having a mean fiber size of 4 µm and a wet volume of 800 cc/5 g to prepare an aqueous slurry. The prepared aqueous slurry was sucked and dehydrated by use of a stainless steel cylindrical metal net of 200 mesh to form a cylindrical molded product. The cylindrical molded product was further heated and dried at 105°C to obtain a cylindrical holding material of 100 mm in inner diameter, 7 mm in thickness, 100 mm in length and 51 g in weight.

### (Example 2)

0.8 parts by weight of the fibrillated fiber, which was obtained in Example 1, was mixed with 100 parts by weight of alumina fiber having a mean fiber size of 4 µm and a wet volume of 800 cc/5 g to prepare an aqueous slurry. Then, as similar to the case of Example 1, the cylindrical molded product was further heated and dried at 105°C to obtain a cylindrical holding material of 100 mm in inner diameter, 7 mm in thickness, 100 mm in length and 51 g in weight.

### (Example 3)

0.5 parts by weight of the fibrillated fiber, which was obtained in Example 1, and 2.0 parts by weight of colloidal silica as an inorganic binder was mixed with 100 parts by weight of alumina fiber having a mean fiber size of 4 µm and a wet volume of 800 cc/5 g to prepare an aqueous slurry. Then, as similar to the case of Example 1, the cylindrical molded product was further heated and dried at 105°C to obtain a cylindrical holding material of 100 mm in inner diameter, 7 mm in thickness, 100 mm in length and 51 g in weight.

### (Example 4)

0.5 parts by weight of the fibrillated fiber, which was obtained in Example 1, and 1.5 parts by weight of acrylic emulsion as an organic binder was mixed with 100 parts by weight of alumina fiber having a mean fiber size of 4 µm and a wet volume of 800 cc/5 g to prepare an aqueous slurry. Then, the prepared slurry is dehydrated by suction with a stainless rectangular-parallelepiped net of 200 mesh to obtain a mat-like molded product. The molded product was heated and dried at 105°C to obtain a mat-like holding material of 330 mm in length, 7 mm in thickness, 100 mm in width and 51 g in weight.

### (Comparative Example 1)

An intention to obtain a cylindrical holding material of 100 mm in inner diameter, 7 mm in thickness, 100 mm in length and 51 g in weight was tried in the same manner as in Example 1 except that the fibrillated fiber was replaced by an acrylic organic binder. It was however impossible to obtain the holding material having an aimed shape because the holding material became thick after drying.

### (Comparative Example 2)

A cylindrical holding material of 100 mm in inner diameter, 7 mm in thickness, 100 mm in length and 51 g in weight was obtained in the same manner as in Example 1 except that the fibrillated fiber was replaced by an acrylic organic binder while the amount of the binder was changed to 8 parts by weight.

### (Comparative Example 3)

8 parts by weight of acrylic emulsion as an organic binder was mixed with 100 parts by weight of alumina fiber having a mean fiber size of 4 µm and a wet volume of 800 cc/5 g to prepare an aqueous slurry. Then, the prepared slurry is processed as in the case of Example 4 to obtain a mat-like holding material of 330 mm in length, 7 mm in thickness, 100 mm in width and 51 g in weight.

### (Mount Test)

Each of the holding materials obtained in Example 1 and Comparative Example 2 was wound on a cordierite catalyst carrier of a cylindrical honey-comb structure having an outer diameter of 100 mm and a length of 110 mm, and then mounted in a stainless steel casing to produce a catalytic converter. The produced catalytic converter was connected to an exhaust pipe of a gasoline engine. Exhaust gas was passed through the catalytic converter. Gas emitted from the catalytic converter during the passage of the exhaust gas was analyzed.

In the catalytic converter provided with the holding material obtained in Comparative Example 2, organic gas supposed to be derived from the organic binder was detected just after the passage of the exhaust gas, and both CO₂ concentration and CO concentration were remarkably high compared with the catalytic converter provided with the holding material obtained in Example 1. When the passage of the exhaust gas was continued, the catalytic converter provided with the holding material obtained in Example 1 exhibited a stable purging function and was good in sealing performance. On the other hand, in the catalytic converter provided with the holding material obtained in Comparative Example 2, both CO₂ concentration and CO concentration were lowered with the elapsed time, so that the catalytic converter exhibited a stable purging function substantially equivalent to that of the catalytic converter provided with the holding material obtained in Example 1, after a certain time had elapsed.

Further, Examples 2, 3 and 4 also shows preferable results as in the case of Example 1.

Specifically, when the mat-like holding material according to Example 4 was wound on a cordierite catalyst carrier of a cylindrical honey-comb structure having an outer diameter of 100 mm and a length of 110 mm, the mat-like holding material shows no problem in terms of winding as in the case of the mat-like holding material according to Comparative Example 2.

As described above, in accordance with the invention, various problems in the related-art holding material using an organic binder can be solved.

## Claims

1. A holding material (3) for a catalytic converter, interposed in a gap between a catalyst carrier (1) and a metal casing (2) receiving the catalyst carrier (1), **characterized in that** said holding material (3) comprises a molding of inorganic fiber molded with fibrillated fiber into a predetermined shape, said fibrillated fiber having a fiber length ranging from 0.05 mm to 2.0 mm.

2. The holding material (3) of claim 1, wherein
the molding contains 0.2 parts by weight to 5 parts by weight of the fibrillated fiber with respect to 100 parts by weight of the inorganic fiber.

3. The holding material (3) of claim 2, wherein
the molding contains 0.2 parts by weight to 2.5 parts by weight of the fibrillated fiber with respect to 100 parts by weight of the inorganic fiber.

4. The holding material (3) of claim 3, wherein
the molding contains 0.2 parts by weight to 1 parts by weight of the fibrillated fiber with respect to 100 parts by weight of the inorganic fiber.

5. The holding material (3) of claim 1, wherein the molding further contains 0.2 parts by weight to 5 parts by weight of inorganic binder with respect to 100 parts by weight of the inorganic fiber.

6. The holding material (3) of claim 2, wherein the molding further contains 0.2 parts by weight to 5 parts by weight of inorganic binder with respect to 100 parts by weight of the inorganic fiber.

7. The holding material (3) of claim 1, wherein
the inorganic fiber is at least one selected from the group consisting of alumina fiber, mullite fiber, silica-alumina fiber, silica fiber, glass fiber, and rock wool.

8. The holding material (3) of claim 1, wherein
the predetermined shape is one of a cylinder and a mat to be wound on the catalyst carrier (1).

9. The holding material (3) of claim 1, wherein
the fibrillated fiber is made of at least one of wood pulp, bast pulp, and cotton pulp.

10. The holding material (3) of claim 1, wherein
the fibrillated fiber is a mixture of wood pulp and bast pulp, and a weight ratio of the wood pulp to the bast pulp is in a range of from 20:80 to 80:20.

11. The holding material (3) of claim 1, wherein
the molding further contains an organic binder, and an amount of the organic binder is not larger than 3 % by weight.

12. The holding material (3) of claim 1, wherein
the molding further contains 0.2 parts by weight to 2 parts by weight of an organic binder with respect to 100 parts by weight of the inorganic fiber.

13. The holding material (3) of claim 1, wherein
a mean fiber size of the inorganic fiber is in a range of from 3 µm to 7 µm.

14. The holding material (3) of claim 1, wherein
a wet volume of the inorganic fiber is in a range of from 400 cc/5 g to 1,000 cc/5 g.

## Revendications

1. Matériau de retenue (3) pour un convertisseur catalytique, interposé dans un espace entre un support de catalyseur (1) et un boîtier métallique (2) recevant le support de catalyseur (1), **caractérisé en ce que** ledit matériau de retenue (3) contient un moulage de fibre inorganique ― moulé avec de la fibre fibrillée en une forme prédéterminée, ladite fibre fibrillée présentant une longueur de fibre allant de 0,05 mm à 2,0 mm.

2. Matériau de retenue (3) selon la revendication 1, dans lequel le moulage contient de 0,2 partie en poids à 5 parties en poids de fibre fibrillée pour 100 parties en poids de fibre inorganique.

3. Matériau de retenue (3) selon la revendication 2, dans lequel le moulage contient de 0,2 partie en poids à 2,5 parties en poids de fibre fibrillée pour 100 parties en poids de fibre inorganique.

4. Matériau de retenue (3) selon la revendication 3, dans lequel le moulage contient de 0,2 partie en poids à 1 partie en poids de fibre fibrillée pour 100 parties en poids de fibre inorganique.

5. Matériau de retenue (3) selon la revendication 1, dans lequel le moulage contient en outre de 0,2 partie en poids à 5 parties en poids de liant inorganique pour 100 parties en poids de fibre inorganique.

6. Matériau de retenue (3) selon la revendication 2, dans lequel le moulage contient en outre de 0,2 partie en poids à 5 parties en poids de liant inorganique pour 100 parties en poids de fibre inorganique.

7. Matériau de retenue (3) selon la revendication 1, dans lequel la fibre inorganique est au moins une fibre sélectionnée dans le groupe constitué par la fibre d'alumine, la fibre de mullite, la fibre de silice-alumine, la fibre de silice, la fibre de verre et la laine de roche.

8. Matériau de retenue (3) selon la revendication 1, dans lequel la forme prédéterminée est une forme parmi un cylindre et un mat à enrouler sur le support de catalyseur (1).

9. Matériau de retenue (3) selon la revendication 1, dans lequel la fibre fibrillée est constituée d'au moins une pâte parmi la pâte de bois, la pâte de fibre libérienne et la pâte de coton.

10. Matériau de retenue (3) selon la revendication 1, dans lequel la fibre fibrillée est un mélange de pâte de bois et de pâte de fibre libérienne, et le rapport pondéral de la pâte de bois à la pâte de fibre libérienne est compris dans une plage allant de 20/80 à 80/20.

11. Matériau de retenue (3) selon la revendication 1, dans lequel le moulage contient en outre un liant organique, et la quantité de liant organique ne dépasse pas 3 % en poids.

12. Matériau de retenue (3) selon la revendication 1, dans lequel le moulage contient en outre de 0,2 partie en poids à 2 parties en poids de liant organique pour 100 parties en poids de fibre inorganique.

13. Matériau de retenue (3) selon la revendication 1, dans lequel la taille de fibre moyenne de la fibre inorganique est comprise dans une plage allant de 3 µm à 7 µm.

14. Matériau de retenue (3) selon la revendication 1, dans lequel le volume mouillé de la fibre inorganique est compris dans une plage allant de 400 cm³/5 g à 1 000 cm³/5 g.

## Patentansprüche

1. Halterungsmaterial (3) für einen Katalysator, angeordnet in einem Spalt zwischen einem Katalysatorträger (1) und einem Metallgehäuse (2), welches den Katalysatorträger (1) aufnimmt, **dadurch gekennzeichnet, dass** das Halterungsmaterial (3) eine Form bzw. einen Formkörper aus anorganischen Fasern umfasst, geformt mit fibrillierten Fasern in eine vorbestimmte Form, wobei die fibrillierte Faser eine Faserlänge in dem Bereich von 0,05 mm bis 2,0 mm aufweist.

2. Halterungsmaterial (3) nach Anspruch 1, wobei die Form bzw. der Formkörper 0,2 Gewichtsteile bis 5 Gewichtsteile der fibrillierten Faser in Bezug auf 100 Gewichtsteile der anorganischen Faser enthält.

3. Halterungsmaterial (3) nach Anspruch 2, wobei die Form bzw. der Formkörper 0,2 Gewichtsteile bis 2,5 Gewichtsteile der fibrillierten Faser in Bezug auf 100 Gewichtsteile der anorganischen Faser enthält.

4. Halterungsmaterial (3) nach Anspruch 3, wobei die Form bzw. der Formkörper 0,2 Gewichtsteile bis 1 Gewichtsteil der fibrillierten Faser in Bezug auf 100 Gewichtsteile der anorganischen Faser enthält.

5. Halterungsmaterial (3) nach Anspruch 1, wobei die Form bzw. der Formkörper des Weiteren 0,2 Gewichtsteile bis 5 Gewichtsteile eines anorganischen Bindemittels in Bezug auf 100 Gewichtsteile der anorganischen Faser enthält.

6. Halterungsmaterial (3) nach Anspruch 2, wobei die Form bzw. der Formkörper des Weiteren 0,2 Gewichtsteile bis 5 Gewichtsteile eines anorganischen Bindemittels in Bezug auf 100 Gewichtsteile der anorganischen Faser enthält.

7. Halterungsmaterial (3) nach Anspruch 1, wobei die anorganische Faser wenigstens eine ist, gewählt aus der Gruppe bestehend aus Aluminiumoxidfaser, Mullitfaser, Siliziumdioxid-Aluminiumoxid-Faser, Siliziumdioxidfaser, Glasfaser und Steinwolle.

8. Halterungsmaterial (3) nach Anspruch 1, wobei die vorbestimmte Form eine gewählt aus einem Zylinder und einer Matte ist, um um den Katalysatorträger (1) gewickelt zu werden.

9. Halterungsmaterial (3) nach Anspruch 1, wobei die fibrillierte Faser hergestellt ist aus wenigstens einem aus Holzmasse, Bastbrei bzw. -masse und Baumwollhalbstoff bzw. Baumwollmasse.

10. Halterungsmaterial (3) nach Anspruch 1, wobei die fibrillierte Faser eine Mischung aus Holzmasse und Bastbrei ist, und ein Gewichtsverhältnis der Holzmasse zu dem Bastbrei in dem Bereich von 20:80 bis 80:20 liegt.

11. Halterungsmaterial (3) nach Anspruch 1, wobei die Form bzw. der Formkörper des Weiteren ein organisches Bindemittel enthält, und eine Menge des organischen Bindemittels nicht mehr als 3 Gew.-% beträgt.

12. Halterungsmaterial (3) nach Anspruch 1, wobei die Form bzw. der Formkörper des Weiteren 0,2 Gewichtsteile bis 2 Gewichtsteile eines organischen Bindemittels in Bezug auf 100 Gewichtsteile der anorganischen Faser enthält.

13. Halterungsmaterial (3) nach Anspruch 1, wobei eine mittlere Fasergröße bzw. -länge der anorganischen Faser in einem Bereich von 3 µm bis 7 µm liegt.

14. Halterungsmaterial (3) nach Anspruch 1, wobei ein nasses Volumen der anorganischen Faser in einem Bereich von 400 cm³/5 g bis 1.000 cm³/5 g liegt.
